# FASCICULE DE BREVET EUROPEEN

(11) **EP 3 610 196 B1**
(45) Date de publication et mention de la délivrance du brevet: **15.09.2021**
(21) Numéro de dépôt: 18722108.0
(22) Date de dépôt: 29.03.2018
(51) Int. Cl.: F23G 5/08, F23G 5/027, F23G 5/46, C10K 3/00

(54) **PROCÉDÉ ET INSTALLATION DE PRODUCTION D'ÉLECTRICITÉ À PARTIR D'UNE CHARGE DE COMBUSTIBLE SOLIDE DE RÉCUPÉRATION**
FESTVERFAHREN UND ANLAGE ZUR ERZEUGUNG VON ELEKTRIZITÄT AUS EINER AUS RECYCELTEN FESTBRENNSTOFF BESTEHENDER LAST
METHOD AND FACILITY FOR PRODUCING ELECTRICITY FROM A SOLID RECYCLED WASTE LOAD

(30) Priorité: 11.04.2017 FR 1753173
(43) Date de publication de la demande: 19.02.2020
(73) Titulaire: Europlasma, 40110 Morcenx-la-Nouvelle (FR)
(72) Inventeur: FERRIERE, Yannick, 33420 Daignac (FR)
(74) Mandataire: Plasseraud IP
(86) Numéro de dépôt international: PCT/FR2018/050789
(87) Numéro de publication internationale: WO 2018/189448

(56) Documents cités:
- EP-A1- 1 077 248
- EP-A1- 1 277 825
- EP-A1- 1 724 326
- EP-A1- 2 767 576
- WO-A1-2007/113330
- WO-A1-2013/032352
- DE-A1- 10 047 787
- FR-A1- 2 845 391
- US-A1- 2007 272 131

## Description

### ARRIERE-PLAN DE L'INVENTION

### Domaine de l'invention

La présente invention est dans le domaine général de la valorisation de déchets de ressources renouvelables, notamment d'une charge de combustible solide de récupération (CSR). Elle concerne plus précisément un procédé de production d'énergie électrique à partir d'une telle charge de CSR.

Elle vise également une installation pour la mise en œuvre de ce procédé de production d'énergie électrique.

### Arrière-plan technologique

De nos jours, la diversification des ressources énergétiques constitue un véritable défi pour la plupart des pays. Les ressources fossiles s'amenuisant, il devient nécessaire d'importer pour ces pays des énergies fossiles, ce qui induit des coûts considérables dans leur balance commerciale.

Aussi, la mise en œuvre d'énergies endogènes renouvelables constitue un enjeu environnemental et économique majeur pour ces pays.

Il est ainsi connu de produire de l'énergie électrique à partir de biomasse. Cette biomasse est d'abord transformée en gaz de synthèse dans un réacteur de gazéification, ce gaz étant refroidi et nettoyé puis injecté dans des moteurs à gaz couplés à un générateur électrique pour produire de l'énergie électrique,

Des procédés et installation selon l'état de la techniques sont décrits par les documents WO2016/090198, US2013/017062 et WO2008/015777.

Néanmoins, on observe que les procédés de l'état de l'art pour produire de l'électricité à partir de ressources renouvelables présentent de nombreux inconvénients.

Ainsi, s'il est connu que les moteurs à gaz présentent un rendement plus important que les turbines à vapeur, ils ne sont pas en mesure de répondre instantanément à des fluctuations importantes en termes de quantité et de qualité de gaz de synthèse injecté à leur entrée.

Or, ces procédés de l'art antérieur, en raison notamment de la nature de la charge à traiter induisent de larges variations dans la qualité du gaz de synthèse produit, notamment en terme de pouvoir calorifique inférieur (PCI).

De plus, une détérioration des moteurs à gaz peut être observée en cas de condensation de l'eau et des polluants tels que des goudrons, contenus dans le gaz de synthèse produit, leur dépôt étant susceptible d'altérer le bon fonctionnement de certains organes constitutifs du moteur et, par conséquent, d'entraîner l'arrêt du moteur.

Par ailleurs, on connaît des combustibles préparés à partir d'ordures ménagères (OM) non fermentescibles et de déchets industriels banals (DIB) broyés, lesquels sont dénommés « combustibles solides de récupération » (CSR).

Ces combustibles présentent l'avantage de posséder un pouvoir calorifique inférieur (PCI) important mais contiennent, par exemple, du chlore et du soufre. Jusqu'à ce jour, de tels combustibles sont essentiellement mis en œuvre dans des cimenteries car la qualité variable des combustibles (granulométrie, taux de chlore, taux de cendre, ...) rend leur mise en œuvre complexe dans d'autres domaines.

Il existe donc un besoin pressant pour un nouveau procédé de production d'énergie électrique qui permette de surmonter les inconvénients de l'art antérieur exposés ci-dessus.

### Objet de l'invention

La présente invention vise à pallier les inconvénients de l'art antérieur en proposant un procédé de production d'énergie électrique à partir de déchets endogènes triés, non fermentescibles, simple dans sa conception et dans son mode opératoire, fiable et économique, répondant aux inconvénients ci-dessus mentionnés.

Notamment, un objet de la présente invention est un tel procédé permettant l'alimentation de moteurs à gaz avec un gaz de synthèse propre ayant les spécificités requises : polluants au minimum, eau en quantité minimale, température inférieure ou égale à une température de service maximale, PCI constant, ou sensiblement constant, et supérieur ou égal à une valeur seuil minimale.

Un autre objet de la présente invention est un tel procédé assurant un débit et une pression constants en gaz de synthèse propre à l'entrée des moteurs à gaz.

Encore un objet de la présente invention est un tel procédé garantissant une optimisation énergétique (électrique et thermique) globale de celui-ci.

La présente invention vise encore une installation industrielle telle qu'une centrale, pour la mise en œuvre de ce procédé de production d'énergie électrique.

### BREVE DESCRIPTION DE L'INVENTION

A cet effet, l'invention concerne un procédé de production d'électricité.

Selon l'invention, on réalise les étapes successives suivantes :
a) fournir un combustible solide de récupération CSR, non fermentescible,
b) produire un gaz de synthèse brut à partir du combustible solide de récupération,
c) purifier ledit gaz de synthèse brut pour générer un gaz de synthèse dont la concentration diminuée en goudrons détermine un point de rosée desdits goudrons inférieur ou égal à 20°C, ladite étape de purification comprenant l'injection dudit gaz de synthèse brut dans une zone de mélange, dans laquelle ledit gaz de synthèse brut rencontre et se mélange avec au moins un dard plasma et/ou au moins un flux oxydant, et l'initiation d'une réaction entre ledit gaz de synthèse et ledit au moins un dard plasma et/ou ledit au moins un flux oxydant dans une zone de réaction placée en aval de ladite zone de mélange pour craquer thermiquement les goudrons, la température du gaz de synthèse en sortie de ladite zone de réaction étant supérieure ou égale à 1100°C,
d) nettoyer ledit gaz de synthèse ainsi purifié pour obtenir un gaz de synthèse propre,
e) abaisser le degré d'humidité relative du gaz de synthèse propre,
f) injecter au moins une partie de celui-ci dans au moins un moteur à gaz pour produire de l'électricité.

La charge de combustible solide de récupération (CSR) à traiter est donc dépourvue de matières fermentescibles et se présente sous forme broyée.

A l'étape c), le craquage thermique permet de rompre les chaînes de goudrons en chaines plus petites ainsi qu'en monoxyde de carbone CO et en dihydrogène H₂. On obtient ainsi un abaissement du point de rosée des goudrons, lequel passe d'environ 170C avant traitement à une température de l'ordre de 20°C. En outre, on conserve avantageusement le PCI du gaz de synthèse ainsi purifié.

A titre purement illustratif, à l'étape c) le flux oxydant est de l'air ou de l'air enrichi en oxygène.

De manière avantageuse, on évite la formation de condensats dans le ou les moteurs à gaz par l'enlèvement dans le gaz de synthèse produit à l'étape b), notamment des goudrons à l'étape c), des particules solides, du brome, du fluor et du chlore à l'étape d) et de l'eau à l'étape e).

Le gaz de synthèse propre ainsi obtenu par le procédé de l'invention autorise dès lors une alimentation sécurisée du ou des moteurs à gaz, prévenant toute dégradation éventuelle de celui-ci ou de ceux-ci. L'intégrité physique et le rendement des moteurs à gaz sont ainsi préservés.

Dans différents modes de réalisation particuliers de ce procédé de production d'électricité, chacun ayant ses avantages particuliers et susceptibles de nombreuses combinaisons techniques possibles:
- après l'étape c) et avant l'étape d), on refroidit le gaz de synthèse purifié dans une chaudière de récupération de chaleur alimentée en eau et mettant en œuvre le chauffage de ladite eau par récupération de la chaleur dudit gaz de synthèse pour produire de la vapeur et alimenter avec ladite vapeur au moins une turbine à vapeur,
- à l'étape e), on refroidit le gaz de synthèse propre à une température inférieure à une température d'introduction du gaz de synthèse propre dans ledit au moins un moteur à gaz pour produire de l'électricité, de manière à désaturer ledit gaz de synthèse propre de son humidité.

Avantageusement, pour une pression donnée du gaz de synthèse propre, on abaisse la température du gaz de synthèse purifié et nettoyé en deçà de la température de rosée de l'eau, l'eau étant évacuée par gravité, puis on met en compression ledit gaz de synthèse, ladite compression élevant la température du gaz de synthèse.

On obtient ainsi un gaz désaturé.

De manière avantageuse, après la mise en compression du gaz de synthèse, on refroidit le gaz ainsi comprimé à une température de service autorisant son injection dans ledit au moins un moteur et on élimine les acides, notamment le H₂S, contenus dans le gaz de synthèse ainsi comprimé avant injection dans ledit au moins un moteur à gaz. De préférence, on refroidit ledit gaz de synthèse à une température inférieure ou égale à une température de service maximale Ts = 50°C pour alimenter ledit au moins un moteur à gaz.
- ledit au moins un moteur à gaz est alimenté en continu avec ledit gaz de synthèse propre, la pression du gaz de synthèse à l'entrée dudit au moins un moteur à gaz étant constante ou sensiblement constante.

De préférence, à l'étape a), on fournit ledit combustible solide de récupération CSR en quantité nécessaire pour produire plus de gaz de synthèse que nécessaire à l'alimentation dudit au moins un moteur à l'étape f) et on régule les fluctuations de volume de gaz de synthèse propre généré en produisant, à partir du gaz de synthèse non injecté dans ledit au moins un moteur, de la vapeur pour alimenter au moins une turbine à vapeur.

En fonction des fluctuations de volume de gaz de synthèse généré, une proportion comprise entre au moins 70 % et 90 % du gaz de synthèse propre généré peut ainsi être adressée audit au moins un moteur à gaz. De manière avantageuse, on alimente au moins une chambre de combustion avec le surplus dudit gaz de synthèse propre non injecté dans ledit au moins un moteur à gaz, les fumées issues de la combustion dudit gaz de synthèse propre étant adressées à une unité de récupération de chaleur alimentée en eau et mettant en œuvre le chauffage de ladite eau par récupération de la chaleur desdites fumées pour produire de la vapeur.

Ladite au moins une chambre de combustion et ladite unité de récupération de chaleur font partie intégrante d'une chaudière de combustion.
- à l'étape d), on récupère les suies pour les brûler dans au moins une chambre de combustion, les fumées issues de la combustion desdites suies étant adressées à une unité de récupération de chaleur alimentée en eau et mettant en œuvre le chauffage de ladite eau par récupération de la chaleur desdites fumées pour produire de la vapeur et alimenter avec ladite vapeur au moins une turbine à vapeur.

Ainsi, le procédé de l'invention générant nombre de suies, on optimise énergétiquement celui-ci en récupérant lesdites suies, en les brulant et en produisant de la vapeur à partir de celles-ci. De préférence, on alimente au moins une chambre de combustion de type cyclone avec lesdites suies.

L'extraction des suies est avantageusement réalisée par des moyens d'extraction comprenant une vis sans fin.

De manière avantageuse, on contrôle le niveau de suies en sortie du filtre à manches pour assurer une quantité adéquate, c'est-à-dire comprise entre un minima et un maximum, de suies alimentant ladite au moins une chambre de combustion. A titre purement illustratif, on met en œuvre des capteurs de niveau configurés pour déterminer ces seuils. Les suies sont transportées dans un milieu étanche, de préférence dans un milieu non oxydant, jusqu'à ladite au moins une chambre de combustion afin d'éviter leur combustion durant leur transport. A titre d'exemple, ces suies sont transportées par un convoyeur pneumatique.

Selon un autre aspect du procédé, on transporte l'eau vers ladite ou lesdites chaudières de récupération et la vapeur produite vers ladite au moins une turbine à vapeur en circuit fermé.

La présente invention concerne également une installation pour la mise en œuvre du procédé de production d'électricité tel que décrit précédemment, ladite installation comprenant :
- un réacteur de gazéification pour produire un gaz de synthèse brut,
- une unité pour purifier le gaz de synthèse brut, ladite unité comprenant une zone de mélange, dans laquelle ledit gaz de synthèse brut injecté au travers d'au moins un port d'entrée de ladite unité rencontre et se mélange avec au moins un dard plasma et/ou au moins un flux oxydant, chaque dard plasma étant généré par une torche à plasma, de préférence chaque flux oxydant étant produit par un moyen d'introduction d'un flux oxydant dans ladite unité, ladite unité comprenant également une zone de réaction placée en aval de ladite zone de mélange dans laquelle se produit une réaction entre ledit gaz de synthèse et ledit au moins un dard plasma et/ou ledit au moins un flux oxydant afin d'abaisser par craquage thermique la concentration de goudrons contenus dans le gaz de synthèse brut et atteindre un point de rosée desdits goudrons inférieur ou égal à 20°C, la température du gaz de synthèse en sortie de ladite zone de réaction étant supérieure ou égale à 1100°C,
- une chaudière de récupération de chaleur alimentée en eau et configurée pour chauffer ladite eau par récupération de la chaleur dudit gaz de synthèse pour produire de la vapeur,
- une unité de filtration comportant au moins un filtre à manches pour nettoyer le gaz de synthèse purifié,
- un dispositif laveur/refroidisseur et un dispositif de mise en compression du gaz de synthèse placé en aval dudit dispositif laveur/refroidisseur, dans le sens de déplacement dudit gaz de synthèse vers au moins un moteur à gaz, lesquels permettent d'abaisser le degré d'humidité relative du gaz de synthèse propre généré en sortie du système de nettoyage,
- au moins un moteur à gaz,
- une chaudière de combustion pour brûler le surplus du gaz de synthèse produit non adressé audit au moins un moteur à gaz, ladite chaudière de combustion comprenant au moins une chambre de combustion et au moins un port de sortie des gaz de combustion relié à une unité de récupération de chaleur, ladite unité de récupération de chaleur étant alimentée en eau et étant configurée pour chauffer ladite eau par récupération de la chaleur desdits gaz de combustion pour produire de la vapeur, et
- au moins une turbine à vapeur alimentée en vapeur par au moins ladite chaudière de récupération de chaleur et ladite unité de récupération de chaleur pour produire de l'électricité, l'ensemble de ces éléments permettant de maximiser l'efficacité énergétique de ladite installation.

Selon un aspect de l'installation de l'invention, ledit au moins un moteur à gaz et ladite chaudière de combustion sont placés en parallèle de sorte que le gaz de synthèse non adressé audit au moins un moteur à gaz est envoyé vers ladite chaudière.

Selon un autre aspect de l'installation de l'invention, ladite unité de filtration comporte dans sa partie inférieure des moyens d'extraction desdites suies, lesquelles sont adressées à au moins une chambre de combustion de ladite chaudière par un moyen de transport placé dans un milieu étanche et non oxydant.

On valorise ainsi les suies issues du craquage thermique des goudrons à l'étape c) car ces dernières présentent un pouvoir calorifique très important.

De préférence, ces moyens d'extraction comprennent une vis sans fin.

Ces moyens d'extraction peuvent également comprendre des sondes de niveau, notamment une sonde déterminant un niveau de seuil inférieur en deçà duquel la quantité de suies à transporter pour alimenter la chaudière de combustion serait insuffisante.

Selon un autre aspect de l'installation de l'invention, ladite chaudière de combustion comporte au moins une chambre cyclonique pour recevoir lesdites suies.

Selon un autre aspect de l'installation de l'invention, le circuit acheminant l'eau auxdites chaudières et transportant la vapeur vers ladite au moins une turbine à vapeur est un moyen de transport en circuit fermé.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement les étapes du procédé de production d'électricité à partir d'une charge de CSR selon un mode de réalisation particulier de la présente invention ;
- la Figure 2 est une vue en coupe d'un filtre à manches de l'installation pour la production d'électricité selon un mode de réalisation de la présente invention,
- la Figure 3 représente schématiquement une chaudière de combustion de l'installation de la Fig. 2, ladite chaudière de combustion permettant de revaloriser les suies issues du filtre à manches et l'excédent de gaz de synthèse propre généré par le procédé et non injecté dans les moteurs à gaz ;

### DESCRIPTION DETAILLEE DE MODE DE REALISATION DE L'INVENTION

Tout d'abord, on note que les figures ne sont pas à l'échelle.

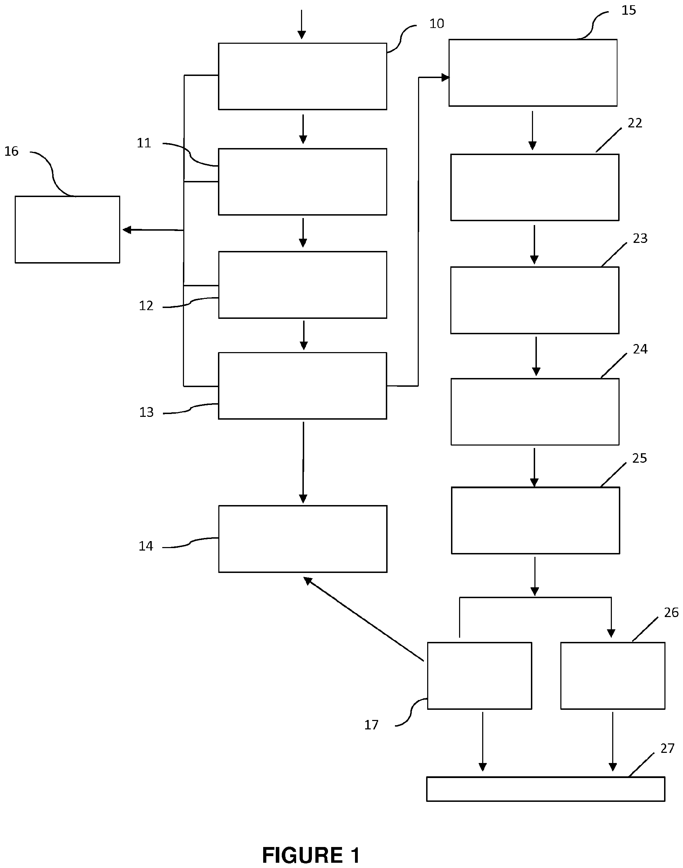

La Figure 1 représente schématiquement les différentes étapes du procédé de production d'électricité à partir d'une charge de combustible solide de récupération (CSR) selon un mode de réalisation particulier de la présente invention

Les éléments identiques apparaissant sur les différentes figures, portent les mêmes références.

### Etape de gazéification 10 de la charge dans un gazéifieur à lit fixe

La charge à traiter est tout d'abord introduite dans un gazéifieur, encore appelé « gazéificateur », avec un débit connu.

Ainsi, et de préférence, la charge à traiter est injectée dans ce gazéifieur par une vis sans fin refroidie.

Cette charge à traiter est un combustible solide de récupération (CSR) injecté sous forme broyée. Le combustible est travaillé de sorte à alimenter le gazéifieur avec une charge la plus homogène possible. Une telle charge a également l'avantage de présenter un pouvoir calorifique inférieur (PCI) important mais contient, par contre, des polluants tels que du Chlore.

La gazéification consiste à décomposer en présence d'un gaz réactif tel que de l'air, la charge de CSR broyée afin d'obtenir un produit gazeux brut, c'est-à-dire non purifié. Ce gaz de synthèse, encore appelé "Product gas", est avantageusement riche en monoxyde de carbone (CO), en dihydrogène (H₂), en dioxyde de carbone (CO₂), en méthane (CH₄), en eau (H₂O) et en azote (N₂).

Lors de ce processus, la charge à traiter est soumise à différents phénomènes thermochimiques survenant de manière successive:
- la pyrolyse, au cours de laquelle on assiste à une décomposition thermique de matières carbonées sans présence d'oxygène et à la libération de gaz combustibles et non combustibles par la charge. Ces gaz comprennent ainsi des vapeurs non condensables (méthane, hydrogène, monoxyde de carbone, dioxyde de carbone,...) et des goudrons.
- la combustion des matières volatiles issues de l'étape de pyrolyse entraînant la production de dioxyde de carbone (CO₂) et d'eau (H₂O), accompagnée d'un dégagement de chaleur,
- la gazéification qui consiste en la réaction du char présent dans la charge à traiter avec le dioxyde de carbone (CO₂) et la vapeur d'eau issus de l'étape de combustion.

Les réactions de combustion sont exothermiques et apportent l'énergie nécessaire à la gazéification qui, elle, est endothermique.

Le gazéifieur est avantageusement équipé d'un dispositif d'injection d'oxygène assurant un enrichissement de l'air de gazéification afin de diminuer la teneur en azote dans le gaz de synthèse brut produit, et donc de limiter sa dilution.

A titre purement illustratif, on peut ainsi augmenter la teneur en oxygène de l'air de gazéification de 21% à 40%. En parallèle, la teneur en azote dans le gaz baisse alors de 79% à 60%.

La dilution du gaz par l'azote étant ainsi limitée, le gaz de synthèse brut obtenu en sortie du gazéifieur est plus riche. De manière avantageuse, cet ajout d'oxygène dans l'air de gazéification permet d'augmenter le PCI du gaz de synthèse brut produit ainsi que d'accroître le débit entrant de la charge à traiter dans le gazéifieur.

Ce gazéifieur est ici à lit fixe à contre-courant.

Rappelons que dans un tel gazéifieur, l'alimentation de la charge de CSR broyée se fait par le haut du réacteur tandis que l'air est injecté dans la partie inférieure de ce réacteur à travers une grille, laquelle prend ici la forme d'une sole en béton ajourée.

Ce gazéifieur comporte au moins un agitateur, chaque agitateur comportant un bras mobile pour étaler la charge sur la sole ajourée avec une hauteur de lit déterminée en vue de favoriser les réactions de gazéification sur l'ensemble du lit.

Le gazéifieur peut également être équipé d'un dispositif d'injection de vapeur sous le lit de gazéification. Cette injection de vapeur, qui engendre des réactions endothermiques permet alors de limiter la montée en température de la sole ajourée pour éviter la vitrification des cendres, en raison de l'injection d'air enrichi.

L'injection de cette vapeur a avantageusement un double impact. Elle permet non seulement d'augmenter la teneur en CO et H₂ dans le gaz, et par conséquent, d'accroître le pouvoir calorifique inférieur (PCI) du gaz de synthèse brut produit, mais également de baisser la teneur en carbone dans les cendres récupérées sous le gazéifieur.

Ces cendres résiduelles non entrainées dans le gaz, sont extraites du gazéifieur et transportées vers une unité de stockage 16.

Néanmoins, un tel gazéifieur à lit fixe produit une quantité importante de goudrons, qu'il convient d'éliminer du gaz de synthèse brut produit en vue de son exploitation.

Le gaz de synthèse brut produit par le gazéifieur est ainsi dirigé vers une unité de purification afin de subir une étape 12 dite de purification lors de laquelle on élimine notamment les goudrons contenus dans ce gaz.

Au préalable, et en sortie du gazéifieur, le gaz de synthèse brut est acheminé vers un dispositif de dépoussiérage 11, lequel permet de piéger les poussières contenues dans ce gaz et d'avoir ainsi un gaz de synthèse brut moins chargé en particules solides.

### Etape de purification 12

L'unité de purification reçoit le gaz de synthèse brut généré au niveau du gazéifieur 10 et dépoussiéré par le dispositif de dépoussiérage 11 en vue d'assurer l'élimination des goudrons présents en quantité importante dans ce gaz.

L'unité de purification comprend ici successivement :
- une enceinte d'introduction à laquelle est relié un réacteur, l'enceinte d'introduction et le réacteur ayant chacun un volume interne délimité par des parois recouvertes au moins partiellement d'éléments réfractaires, cette enceinte et le réacteur étant en communication de fluide,
- l'enceinte d'introduction comporte une torche plasma à arc non transféré ayant un axe principal, cette torche étant destinée à générer un dard plasma ayant un axe de propagation sensiblement colinéaire avec l'axe principal de cette torche,
- l'enceinte d'introduction comporte au moins un port d'entrée placé en aval de cette torche plasma pour l'introduction du gaz de synthèse à purifier,
- le réacteur ayant une forme allongée sensiblement cylindrique, l'axe longitudinal de ce réacteur est sensiblement colinéaire avec l'axe de propagation du dard plasma, le réacteur comportant dans sa partie aval un port de sortie du gaz de synthèse purifié,
- le réacteur comprend à son entrée, un anneau oxydant, lequel comporte une pluralité d'orifices d'introduction d'un gaz oxydant, tel que de l'air.

Ces orifices d'introduction sont reliés à un circuit d'alimentation en gaz, en étant régulièrement répartis ou non sur le pourtour du réacteur en définissant ainsi un anneau oxydant.

Cet anneau oxydant permet d'envoyer de l'air chaud dans l'unité de purification afin de maintenir des niveaux de températures élevés tout au long de cette unité et de créer de la turbulence en tête du réacteur afin d'optimiser le mélange de l'ensemble formé par le gaz de synthèse, l'air plasma et le gaz oxydant, et de favoriser ainsi les réactions de craquage thermique.

Cet air chaud provient avantageusement d'une chaudière de combustion destinée à brûler les suies récupérées au niveau d'un filtre à manches lors du nettoyage du gaz de synthèse purifié et l'excédent du gaz de synthèse propre non injecté dans les moteurs à gaz (voir plus loin).

On peut qualifier cette unité de purification de système ayant une configuration en ligne, c'est-à-dire une torche à plasma, puis le dispositif d'injection puis le réacteur. Une telle configuration en ligne présente de nombreux avantages, notamment une grande simplicité d'opération, un effet d'aspiration du gaz de synthèse et du gaz oxydant par le dard plasma assurant par la même un mélange intime du gaz de synthèse, du dard plasma et du gaz oxydant mais aussi un entraînement du mélange gaz de synthèse/dard plasma/gaz oxydant le long d'une droite (l'axe de propagation) ce qui minimise les éventuelles interactions entre ce mélange surchauffé et les parois de l'enceinte d'introduction et du réacteur.

Le mélange intime ainsi réalisé assure, par ailleurs, un transfert d'énergie direct ce qui permet non seulement une consommation moindre d'énergie mais également d'atteindre des températures du mélange gaz de synthèse/dard plasma/gaz oxydant plus élevées qu'avec les dispositifs de l'art antérieur.

Grâce au dard plasma, des températures de l'ordre de 3000°C sont atteintes localement, lesquelles sont nécessaires pour le craquage des goudrons. Le gaz de synthèse ainsi purifié présente en sortie de l'unité de purification une température typiquement de l'ordre de 1200°C.

Les réactions prenant place dans le réacteur comprennent des réactions de craquage thermique, de reformage à la vapeur et d'oxydation. Ces réactions enrichissent avantageusement le gaz de synthèse produit lors de l'étape de gazéification en transformant des molécules en H₂et CO. Ces réactions entrainent également la formation de suies dans le gaz de synthèse, lesquelles seront traitées en aval de cette unité de purification. Ces réactions permettent d'abattre au moins 90% des goudrons contenus dans le gaz de synthèse brut.

La teneur en goudrons dans le gaz de synthèse purifié sortant de l'unité de purification est en adéquation avec les spécifications requises pour une exploitation sur des moteurs à gaz (point de rosée inférieur à 20°C). Le gaz de synthèse ainsi purifié est envoyé vers une chaine de traitement avant d'être adressé à des moteurs à gaz pour générer de l'électricité.

### Chaudière de récupération

En sortie de l'unité de purification, le gaz de synthèse purifié est dirigé vers une chaudière de récupération d'énergie 13 pour refroidir ce gaz de synthèse.

Cette chaudière de récupération 13 est composée d'une chambre de rayonnement à tubes d'eau, puis d'une série d'échangeurs de type vaporiseurs/surchauffeurs, et économiseurs.

Le rôle de cette chaudière de récupération 13 est ici double :
- d'une part, assurer un abaissement de la température du gaz de synthèse purifié à une température autorisant son traitement en aval de cette chaudière, et
- d'autre part, récupérer la chaleur du gaz de synthèse purifié afin de produire un maximum de vapeur qui servira à alimenter une ou plusieurs turbines à vapeur 14.

Ainsi, la température du gaz de synthèse purifié passe de 1200°C à l'entrée de ladite chaudière de récupération 13 à une température d'environ 200°C. L'énergie thermique du gaz de synthèse purifié est ici récupérée sous forme de vapeur à 370°C et 32 bars abs.

Cette chaudière de récupération 13 est également équipée d'un convoyeur à chaînes de type Redler pour l'évacuation des résidus. Cette partie est une garde hydraulique qui permet d'avoir un élément de sécurité sur la chaudière. Elle assure une étanchéité parfaite du procédé.

### Filtre à manches

En sortant de la chaudière de récupération 13, le gaz de synthèse, purifié et refroidi, est dirigé vers un filtre à manches 15 qui va permettre de collecter l'ensemble des poussières et particules solides contenues dans ce gaz.

Le filtre à manches 15 est configuré non seulement pour capter les poussières et autres particules contenues dans le gaz mais également piéger les acides (SOx, HCl et HF).

Le réactif utilisé est de la chaux éteinte de manière à permettre la neutralisation des composés chlorés contenus dans le gaz de synthèse. Le gaz de synthèse purifié est envoyé vers le filtre à manches 15, du bas vers le haut, avec un captage des particules sur les manches filtrantes. Ces manches filtrantes sont nettoyées de façon cyclique par injection d'azote à contre-courant.

Le gaz de synthèse purifié, une fois propre, est collecté en tête du filtre à manches 15 et dirigé vers un dispositif laveur/refroidisseur.

De manière avantageuse, on récupère également les suies au niveau de ce filtre à manches 15 afin de revaloriser celles-ci. A cette fin, on transporte les suies ainsi récupérées pour alimenter une chaudière 17 de combustion, les fumées issues de la combustion desdites suies étant adressées à une unité de récupération de chaleur alimentée en eau et mettant en œuvre le chauffage de ladite eau par récupération de la chaleur desdites fumées pour produire de la vapeur et alimenter avec ladite vapeur au moins une turbine à vapeur 14.

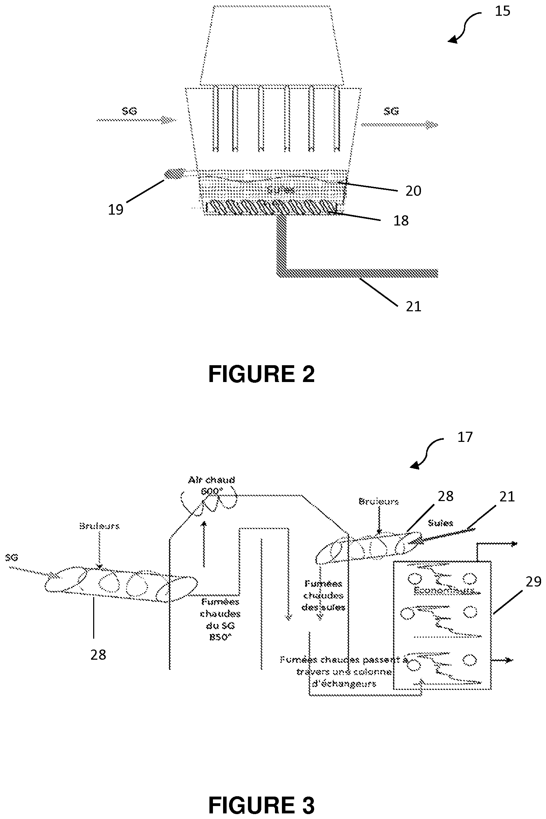

La Figure 2 est une représentation schématique de ce filtre à manches 15. L'extraction des suies est avantageusement réalisée par des moyens d'extraction comprenant une vis 18 sans fin. Ces moyens d'extraction comprennent également un ou plusieurs capteurs 19 de niveau, ici des capteurs placés de part et d'autre d'une ligne médiane 20 pour s'assurer qu'une quantité de suies suffisante existe. A titre d'exemple, un premier capteur détermine un seuil maximum et un second capteur détermine un seuil minimum à ne pas dépasser pour assurer un bon dosage des suies ainsi qu'une étanchéité parfaite.

Les suies ainsi extraites sont transportées dans un milieu dépourvu d'air pour éviter leur combustion. Ces suies sont ici transportées par un convoyeur 21 pneumatique.

### Trempe (Quench)

Le gaz de synthèse débarrassé de ses cendres et particules est soumis à une étape de trempe 22, ou « quench », dans un dispositif laveur/refroidisseur, laquelle va refroidir celui-ci d'une température à l'entrée du dispositif de l'ordre de 200°C à une température en sortie du dispositif d'environ 40°C.

Cet abaissement de la température du gaz de synthèse est d'abord obtenu grâce à l'évaporation d'une solution aqueuse pulvérisée dans une chambre de saturation, laquelle permet d'abaisser la température du gaz de synthèse à environ 70°C. Il est ensuite lavé en circulant à contre-courant d'un flux de gouttes de solution de lavage tombant en pluie, lesquelles permettent de capter les goudrons et les poussières résiduels. Le gaz de synthèse pénètre alors dans des lits de garnissage structurés où il est encore refroidi jusqu'à une température de l'ordre de 40°C grâce à une solution de refroidissement ruisselant sur le garnissage, cette solution circulant en circuit fermé. Une purge de déconcentration contenant les composés absorbés par la solution de lavage est envoyée vers une station de traitement des eaux de procédé.

Le gaz de synthèse totalement propre et refroidi est ensuite dirigé vers un surpresseur 23.

### Surpresseur 23

A la sortie du dispositif laveur/refroidisseur, le gaz de synthèse propre est envoyé vers un surpresseur 23. Ce dernier est configuré pour accepter un gaz de synthèse en dépression en amont de celui-ci et pour comprimer ce gaz de synthèse de sorte à véhiculer ce dernier vers des moteurs à gaz et une chaudière 17 de combustion, tout en limitant les risques éventuels de fuite. Typiquement, le gaz de synthèse sort du surpresseur avec une pression de l'ordre d'une centaine de millibars à l'entrée des moteurs 26.

Le surpresseur permet ainsi de compenser les diverses pertes de charges en ligne, et d'assurer une pression à l'entrée des moteurs à gaz 26 répondant aux spécifications de service. La compression du gaz de synthèse par le surpresseur 23 entraîne une légère augmentation de sa température, cette dernière étant ici de l'ordre de 60°C.

### Système de refroidissement

A la sortie du surpresseur 23, le gaz est envoyé vers un système de refroidissement 24, tel qu'un échangeur thermique. Ce dernier a pour but de descendre la température du gaz de synthèse propre à une température de service admissible par les moteurs à gaz 26. Cette température de service maximale est ici de 50°C.

### Système d'abattement de l'H₂S

Après refroidissement, le gaz de synthèse propre est adressé à un système d'abattement 25 des dérivés soufrés. Une réaction d'adsorption chimique permet de piéger les dérivés soufrés contenus dans le gaz de synthèse propre.

A cet effet, une partie du gaz de synthèse propre est envoyée sur un lit de charbon actif composé de particules ayant un diamètre moyen de l'ordre de plusieurs millimètres.

Une réaction chimique se produit entre le H₂S contenu dans le gaz de synthèse (SG) et le charbon actif, permettant le captage du soufre. Pour que l'adsorption soit optimale, la température du gaz de synthèse doit être d'environ 50°C.

Une telle réaction présente l'avantage de ne pas requérir de fioul mais aussi de ne pas oxyder le gaz de synthèse.

### Chaudière de Combustion 17

La chaudière de combustion 17 est positionnée en sortie du système d'abattement 25 de l'H₂S en étant placée en parallèle des moteurs 26 à gaz. Cette chaudière 17 est équipée d'un brûleur permettant la combustion du surplus de gaz de synthèse non injecté dans les moteurs à gaz 26.

Cette chaudière de combustion a plusieurs missions :
- Réguler la pression du gaz à l'entrée des moteurs à gaz,
- Assurer une flexibilité sur le pilotage de ces moteurs. En effet celle-ci est dimensionnée pour accepter entre 10 et 30% du débit total du gaz de synthèse produit,
- Brûler le gaz de synthèse (SG) non envoyé vers les moteurs ainsi que les suies récupérées par le filtre à manches, avant rejet dans l'atmosphère de façon à respecter la réglementation en vigueur à la cheminée 27, et
- Produire de la vapeur qui sera envoyée vers une turbine 14 à vapeur pour produire de l'électricité.

La Figure 3 est une représentation schématique de cette chaudière 17 de combustion. Les combustions des suies et de l'excédent de gaz de synthèse propre produit par le procédé de l'invention sont réalisées dans des chambres 28 cycloniques intégrées dans cette chaudière 17 de combustion. Cette dernière comprend également un port de sortie des gaz de combustion relié à une unité 29 de récupération de chaleur, cette unité de récupération de chaleur étant alimentée en eau et étant configurée pour chauffer cette eau par récupération de la chaleur des gaz de combustion pour produire de la vapeur.

### Réseau Eau-Vapeur

Une récupération de chaleur est avantageusement prévue dans l'installation pour la mise en œuvre du procédé de production d'électricité afin de maximiser l'efficacité énergétique globale du procédé.

Après l'unité de purification, le gaz de synthèse est ainsi avantageusement envoyé vers une chaudière de récupération d'énergie 13 qui permet de produire une vapeur haute pression.

Pour cela, la chaudière de récupération de chaleur est alimentée en eau et est configurée pour chauffer cette eau par récupération de la chaleur du gaz de synthèse purifié afin de produire de la vapeur.

Enfin, une chaudière 17 de combustion est installée en parallèle des moteurs à gaz afin de traiter le surplus de gaz de synthèse propre non adressé aux moteurs à gaz. Comme décrit ci-dessus, cette chaudière 17 de combustion produit également de la vapeur.

L'installation pour la production d'électricité comporte donc un réseau de fourniture de vapeur qui est un réseau en boucle fermée, lequel comprend les éléments suivants:
- une chaudière de récupération de chaleur : La chaudière de récupération, située en extérieur, refroidit le gaz de synthèse purifié provenant de l'unité de purification et produit de la vapeur surchauffée aux mêmes conditions de pression et température que la chaudière 17 de combustion.
- une chaudière 17 de combustion laquelle a été décrite plus haut,
- un barillet haute pression, lequel forme le collecteur des vapeurs produites par les différentes chaudières.

Celui-ci a plusieurs rôles et notamment :
- En fonctionnement nominal: la totalité de la vapeur générée est envoyée à l'admission turbine.
- En fonctionnement dégradé, par exemple, en cas de problème sur la turbine ou sur la qualité vapeur, la vapeur est envoyée vers un hydrocondenseur via un by-pass.
- De la vapeur est également soutirée sur le barillet pour alimenter le groupe de mise sous vide de l'hydrocondenseur. Une portion de la vapeur produite peut également être utilisée pour alimenter le dégazeur thermique en périodes transitoires.
   - une turbine à vapeur : en marche normale, la vapeur générée dans l'installation est envoyée à la turbine qui est couplée à un générateur de production électrique.

La vapeur basse pression provenant de la turbine est ensuite condensée via un hydrocondenseur sous vide.
- des pompes d'extractions: A la sortie de l'hydrocondenseur, les condensats sont extraits par des pompes d'extractions. Leur rôle est d'évacuer les condensats de l'hydrocondenseur pour les envoyer vers une bâche alimentaire.
- une bâche alimentaire et un dégazeur thermique: La bâche alimentaire a pour rôle d'alimenter en eau les chaudières avec une eau de qualité optimale, et plus particulièrement une eau présentant une très faible teneur en oxygène. La température de l'eau est d'environ 105°C réchauffée par le soutirage barillet ou soutirage turbine, afin d'éliminer l'oxygène contenu dans l'eau.
- des pompes alimentaires : Trois pompes alimentaires sont installées, deux pour le fonctionnement, la dernière étant positionnée en secours des deux autres, afin d'assurer l'alimentation continue en eau de la chaudière.

Le réseau eau-vapeur est un circuit fermé qui permet de récupérer toute la vapeur produite dans ladite installation par le procédé et de la réinjecter dans l'installation pour produire de l'électricité.

A titre d'exemple de mise en œuvre, les différents équipements de l'installation, que ce soit la turbine via l'hydrocondenseur, ou la récupération thermique sur les moteurs, permettent de valoriser une quantité de chaleur de l'ordre de 17 MW thermique.

## Revendications

1. Procédé de production d'électricité, où sont réalisées les étapes successives suivantes :
a) fournir un combustible solide de récupération CSR non fermentescible,
b) produire (10) un gaz de synthèse brut à partir du combustible solide de récupération,
c) purifier (12) ledit gaz de synthèse brut pour générer un gaz de synthèse dont la concentration diminuée en goudrons détermine un point de rosée desdits goudrons inférieur ou égal à 20°C, ladite étape de purification comprenant l'injection dudit gaz de synthèse brut dans une zone de mélange, dans laquelle ledit gaz de synthèse brut rencontre et se mélange avec au moins un dard plasma et/ou au moins un flux oxydant, et l'initiation d'une réaction entre ledit gaz de synthèse et ledit au moins un dard plasma et/ou ledit au moins un flux oxydant dans une zone de réaction placée en aval de ladite zone de mélange pour craquer thermiquement les goudrons, la température du gaz de synthèse en sortie de ladite zone de réaction étant supérieure ou égale à 1100°C,
d) nettoyer (22) ledit gaz de synthèse ainsi purifié pour obtenir un gaz de synthèse propre,
e) abaisser le degré d'humidité relative du gaz de synthèse propre,
f) injecter au moins une partie de celui-ci dans au moins un moteur à gaz (26) pour produire de l'électricité.

2. Procédé selon la revendication 1, **caractérisé en ce qu'**après l'étape c) et avant l'étape d), on refroidit (13) le gaz de synthèse purifié dans une chaudière de récupération de chaleur alimentée en eau et mettant en œuvre le chauffage de ladite eau par récupération de la chaleur dudit gaz de synthèse pour produire de la vapeur et alimenter avec ladite vapeur au moins une turbine à vapeur (14).

3. Procédé selon la revendication 1 ou 2, **caractérisé en ce qu'**à l'étape e), on refroidit le gaz de synthèse propre à une température inférieure à une température d'introduction du gaz de synthèse propre dans ledit au moins un moteur à gaz (26) pour produire de l'électricité, de manière à désaturer ledit gaz de synthèse propre de son humidité.

4. Procédé selon la revendication 3, **caractérisé en ce qu'**après mise en compression du gaz de synthèse, on refroidit le gaz ainsi comprimé à une température de service autorisant son injection dans ledit au moins un moteur et on élimine les acides contenus dans le gaz de synthèse ainsi comprimé avant injection dans ledit au moins un moteur à gaz (26).

5. Procédé selon l'une quelconque des revendications précédentes, **caractérisé en ce que** ledit au moins un moteur à gaz (26) est alimenté en continu avec ledit gaz de synthèse propre, la pression du gaz de synthèse à l'entrée dudit au moins un moteur à gaz (26) étant constante ou sensiblement constante.

6. Procédé selon la revendication 5, **caractérisé en ce qu'**à l'étape a), on fournit ledit combustible solide de récupération CSR en quantité nécessaire pour produire plus de gaz de synthèse que nécessaire à l'alimentation dudit au moins un moteur à l'étape f) et **en ce qu'**on régule les fluctuations de volume de gaz de synthèse propre généré en produisant, à partir du gaz de synthèse non injecté dans ledit au moins un moteur, de la vapeur pour alimenter au moins une turbine à vapeur (14).

7. Procédé selon la revendication 6, **caractérisé en ce qu'**on alimente au moins une chambre de combustion avec le surplus dudit gaz de synthèse propre non injecté dans ledit au moins un moteur à gaz (26), les fumées issues de la combustion dudit gaz de synthèse propre étant adressées à une unité de récupération de chaleur alimentée en eau et mettant en œuvre le chauffage de ladite eau par récupération de la chaleur desdites fumées pour produire de la vapeur.

8. Procédé selon l'une quelconque des revendications précédentes, **caractérisé en ce qu'**à l'étape d), on récupère les suies pour les brûler dans au moins une chambre de combustion, les fumées issues de la combustion desdites suies étant adressées à une unité de récupération de chaleur alimentée en eau et mettant en œuvre le chauffage de ladite eau par récupération de la chaleur desdites fumées pour produire de la vapeur et alimenter avec ladite vapeur au moins une turbine à vapeur (14).

9. Procédé selon la revendication 8, **caractérisé en ce qu'**on extrait lesdites suies au moyen de moyens d'extraction (18-20), puis on transporte lesdites suies en milieu étanche et non oxydant jusqu'à ladite au moins une chambre de combustion.

10. Installation pour la mise en œuvre du procédé de production d'électricité selon l'une quelconque des revendications 1 à 9, ladite installation comprenant :
- un réacteur de gazéification pour produire un gaz de synthèse brut,
- une unité pour purifier le gaz de synthèse brut, ladite unité comprenant une zone de mélange, dans laquelle ledit gaz de synthèse brut injecté au travers d'au moins un port d'entrée rencontre et se mélange avec au moins un dard plasma et/ou au moins un flux oxydant, chaque dard plasma étant généré par une torche à plasma, ladite unité comprenant également une zone de réaction placée en aval de ladite zone de mélange dans laquelle se produit une réaction entre ledit gaz de synthèse et ledit au moins un dard plasma et/ou ledit au moins un flux oxydant afin d'abaisser par craquage thermique la concentration de goudrons contenus dans le gaz de synthèse brut et atteindre un point de rosée desdits goudrons inférieur ou égal à 20°C, la température du gaz de synthèse en sortie de ladite zone de réaction étant supérieure ou égale à 1100°C,
- une chaudière de récupération de chaleur alimentée en eau et configurée pour chauffer ladite eau par récupération de la chaleur dudit gaz de synthèse purifié pour produire de la vapeur,
- une unité de filtration comportant au moins un filtre (15) à manches pour nettoyer le gaz de synthèse purifié,
- un dispositif laveur/refroidisseur et un dispositif de mise en compression du gaz de synthèse placé en aval dudit dispositif laveur/refroidisseur, dans le sens de déplacement dudit gaz de synthèse vers au moins un moteur à gaz (26),
- au moins un moteur à gaz (26),
- une chaudière (17) de combustion pour brûler le surplus du gaz de synthèse produit non adressé audit au moins un moteur à gaz (26), ladite chaudière (17) de combustion comprenant au moins une chambre de combustion et au moins un port de sortie des gaz de combustion relié à une unité de récupération de chaleur, ladite unité de récupération de chaleur étant alimentée en eau et étant configurée pour chauffer ladite eau par récupération de la chaleur desdits gaz de combustion pour produire de la vapeur, et
- au moins une turbine à vapeur (14) alimentée en vapeur par au moins ladite chaudière de récupération de chaleur et ladite unité de récupération de chaleur pour produire de l'électricité, l'ensemble de ces éléments permettant de maximiser l'efficacité énergétique de ladite installation.

11. Installation selon la revendication 10, **caractérisée en ce que** ledit au moins un moteur à gaz (26) et ladite chaudière sont placés en parallèle de sorte que le gaz de synthèse non adressé audit au moins un moteur à gaz (26) est envoyé vers ladite chaudière.

12. Installation selon la revendication 10 ou 11, **caractérisée en ce que** ladite unité de filtration comporte dans sa partie inférieure des moyens d'extraction (18-20) desdites suies, lesquelles sont adressées à au moins une chambre de combustion de ladite chaudière par un moyen de transport placé dans un milieu étanche.

13. Installation selon l'une quelconque des revendications 10 à 12, **caractérisée en ce que** ladite chaudière (17) de combustion comporte au moins une chambre cyclonique pour recevoir lesdites suies.

## Patentansprüche

1. Verfahren zur Erzeugung von Elektrizität, wobei die folgenden aufeinanderfolgenden Schritte durchgeführt werden:
a) Bereitstellen von einem nicht fermentierbaren, festen SRF/RDF-Rückgewinnungsbrennstoff,
b) Herstellen (10) eines Rohsynthesegases aus dem festen Rückgewinnungsbrennstoff,
c) Reinigen (12) des Rohsynthesegases, um ein Synthesegas zu erzeugen, dessen reduzierte Konzentration an Teeren einen Taupunkt der Teere von weniger als oder gleich 20°C bestimmt, wobei der Schritt des Reinigens das Einspritzen des Rohsynthesegases in eine Mischzone umfasst, in der das Rohsynthesegas auf mindestens einen Plasmastrahl und/oder mindestens einen oxidierenden Strom trifft und sich damit vermischt, und das Initiieren einer Reaktion zwischen dem Synthesegas und dem mindestens einen Plasmastrahl und/oder dem mindestens einen oxidierenden Strom in einer stromabwärts von der Mischzone angeordneten Reaktionszone zum thermischen Cracken der Teere, wobei die Temperatur des Synthesegases am Ausgang der Reaktionszone größer oder gleich 1100 °C ist,
d) Säubern (22) des so gereinigten Synthesegases, um ein sauberes Synthesegas zu erhalten,
e) Absenken des relativen Feuchtigkeitsgrades des sauberen Synthesegases,
f) Einspritzen mindestens eines Teils davon in mindestens einen Gasmotor (26) zur Erzeugung von Elektrizität.

2. Verfahren nach Anspruch 1, **dadurch gekennzeichnet, dass** nach dem Schritt c) und vor dem Schritt d) das gereinigte Synthesegas in einem mit Wasser versorgten Wärmerückgewinnungskessel gekühlt (13) wird, und die Erwärmung des Wassers durch Wärmerückgewinnung aus dem Synthesegas betrieben wird, um Dampf zu erzeugen und mit dem Dampf mindestens eine Dampfturbine (14) zu versorgen.

3. Verfahren nach Anspruch 1 oder 2, **dadurch gekennzeichnet, dass** in Schritt e) das saubere Synthesegas auf eine Temperatur gekühlt wird, die kleiner ist als eine Temperatur zum Einleiten des sauberen Synthesegases in den mindestens einen Gasmotor (26) zur Erzeugung von Elektrizität, um das saubere Synthesegas von seiner Feuchtigkeit zu entsättigen.

4. Verfahren nach Anspruch 3, **dadurch gekennzeichnet, dass** nach dem Komprimieren des Synthesegases das so komprimierte Gas auf eine Betriebstemperatur abgekühlt wird, die seine Einspritzung in den mindestens einen Motor ermöglicht, und die im so komprimierten Synthesegas enthaltenen Säuren vor der Einspritzung in den mindestens einen Gasmotor (26) entfernt werden.

5. Verfahren nach einem der vorhergehenden Ansprüche, **dadurch gekennzeichnet, dass** der mindestens eine Gasmotor (26) kontinuierlich mit dem sauberen Synthesegas versorgt wird, wobei der Druck des Synthesegases am Einlass des mindestens einen Gasmotors (26) konstant oder im Wesentlichen konstant ist.

6. Verfahren nach Anspruch 5, **dadurch gekennzeichnet, dass** in Schritt a) der feste SRF/RDF-Rückgewinnungsbrennstoff in einer Menge zugeführt wird, die notwendig ist, um mehr Synthesegas zu erzeugen, als notwendig, um den mindestens einen Motor in Schritt f) zu versorgen, und dass die Volumen-Schwankungen des erzeugten sauberen Synthesegases, reguliert werden, indem aus dem nicht in den mindestens einen Motor eingespritzten Synthesegas Dampf zur Versorgung mindestens einer Dampfturbine (14) produziert wird.

7. Verfahren nach Anspruch 6, **dadurch gekennzeichnet, dass** mindestens eine Brennkammer mit dem Überschuss des sauberen Synthesegases gespeist wird, das nicht in den mindestens einen Gasmotor (26) eingespritzt wird, wobei die Abgase aus der Verbrennung des sauberen Synthesegases zu einer mit Wasser versorgten Wärmerückgewinnungseinheit geschickt werden, und die Erwärmung des Wassers durch Rückgewinnung der Wärme aus den Abgasen zur Erzeugung von Dampf durchgeführt wird.

8. Verfahren nach einem der vorhergehenden Ansprüche, **dadurch gekennzeichnet, dass** in Schritt d) die Ruße zurückgewonnen werden, um sie in mindestens einer Brennkammer zu verbrennen, wobei die Abgase aus der Verbrennung der Ruße einer mit Wasser versorgten Wärmerückgewinnungseinheit zugeführt werden, und die Erwärmung des Wassers durch Rückgewinnung der Wärme aus den Abgasen durchgeführt wird, um Dampf zu erzeugen und den Dampf mindestens einer Dampfturbine (14) zuzuführen.

9. Verfahren nach Anspruch 8, **dadurch gekennzeichnet, dass** die Ruße mittels Extraktionsmitteln (18-20) extrahiert werden und dann die Ruße in einem undurchlässigen und nicht oxidierenden Medium zu der mindestens einen Brennkammer transportiert werden.

10. Anlage zur Durchführung des Verfahrens zur Erzeugung von Elektrizität nach einem der Ansprüche 1 bis 9, wobei die Anlage umfasst:
- einen Vergasungsreaktor zur Herstellung von einem Rohsynthesegas,
- eine Einheit zum Reinigen des Rohsynthesegases, wobei die Einheit eine Mischzone umfasst, in der das Rohsynthesegas, das durch mindestens eine Einlassöffnung injiziert wird, auf mindestens einen Plasmastrahl und/oder mindestens einen oxidierenden Strom trifft und sich damit vermischt, wobei jeder Plasmastrahl von einem Plasmabrenner erzeugt wird, wobei die Einheit auch eine stromabwärts der Mischzone angeordnete Reaktionszone umfasst, in der eine Reaktion zwischen dem Synthesegas und dem mindestens einen Plasmastrahl und/oder dem mindestens einen oxidierenden Strom stattfindet, um durch thermisches Cracken die Konzentration an im Rohsynthesegas enthaltenen Teeren zu senken und einen Taupunkt der Teere von weniger als oder gleich 20°C zu erreichen, wobei die Temperatur des Synthesegases am Ausgang der Reaktionszone größer oder gleich 1100 °C ist,
- einen Wärmerückgewinnungskessel, der mit Wasser versorgt wird und konfiguriert ist, um das Wasser durch Wärmerückgewinnung aus dem gereinigten Synthesegas zu erhitzen, um Dampf zu erzeugen,
- eine Filtrationseinheit mit mindestens einem Schlauchfilter (15) zum Säubern des gereinigten Synthesegases,
- eine Wasch-/Kühlvorrichtung und eine Vorrichtung zum Komprimieren des Synthesegases, die stromabwärts der Wasch-/Kühlvorrichtung angeordnet ist, in Bewegungsrichtung des Synthesegases zu mindestens einem Gasmotor (26) hin,
- mindestens einen Gasmotor (26),
- einen Verbrennungskessel (17) zum Verbrennen des Überschusses des erzeugten Synthesegases, der nicht an den mindestens einen Gasmotor (26) geschickt wird, wobei der Verbrennungskessel (17) mindestens eine Brennkammer und mindestens einen Auslass für Verbrennungsgase umfasst, der mit einer Wärmerückgewinnungseinheit verbunden ist, wobei die Wärmerückgewinnungseinheit mit Wasser versorgt wird und konfiguriert ist, um das Wasser durch Rückgewinnung von Wärme aus den Verbrennungsgasen zur Erzeugung von Dampf zu erwärmen, und
- mindestens eine Dampfturbine (14), die von mindestens dem Wärmerückgewinnungskessel und der Wärmerückgewinnungseinheit mit Dampf versorgt wird, um Elektrizität zu erzeugen, wobei die Anordnung dieser Elemente es ermöglicht, die Energieeffizienz der Anlage zu maximieren.

11. Anlage nach Anspruch 10, **dadurch gekennzeichnet, dass** der mindestens eine Gasmotor (26) und der Kessel parallel angeordnet sind, so dass das nicht an den mindestens einen Gasmotor (26) geschickte Synthesegas zum Kessel geleitet wird .

12. Anlage nach Anspruch 10 oder 11, **dadurch gekennzeichnet, dass** die Filtereinheit in ihrem unteren Teil Mittel (18-20) zum Extrahieren der Ruße umfasst, die durch ein Transportmittel in einem undurchlässigen Medium zu mindestens einer Brennkammer des Kessels transportiert werden.

13. Anlage nach einem der Ansprüche 10 bis 12, **dadurch gekennzeichnet, dass** der Verbrennungskessel (17) mindestens eine Zyklon-Kammer zur Aufnahme der Ruße umfasst.

## Claims

1. Process for producing electricity, where the following successive steps are performed:
a) providing a non-fermentable solid recovered fuel SRF,
b) producing (10) a crude synthesis gas from the solid recovered fuel,
c) purifying (12) said crude synthesis gas to generate a synthesis gas whose reduced concentration of tars determines a dew point of said tars of less than or equal to 20°C, said purification step comprising the injection of said crude synthesis gas into a mixing zone, in which said crude synthesis gas encounters and is mixed with at least one plasma jet and/or at least one oxidant stream, and initiation of a reaction between said synthesis gas and said at least one plasma jet and/or said at least one oxidant stream in a reaction zone placed downstream of said mixing zone to thermally crack the tars, the temperature of the synthesis gas at the outlet of said reaction zone being greater than or equal to 1100°C,
d) cleaning (22) said synthesis gas thus purified to obtain a clean synthesis gas,
e) lowering the relative degree of humidity of the clean synthesis gas,
f) injecting at least a portion thereof into at least one gas engine (26) to produce electricity.

2. Process according to Claim 1, **characterized in that** after step c) and before step d), the purified synthesis gas is cooled (13) in a water-fed heat-recovery boiler which performs the heating of said water by recovering the heat from said synthesis gas to produce steam and to feed with said steam at least one steam turbine (14).

3. Process according to Claim 1 or 2, **characterized in that** in step e), the clean synthesis gas is cooled to a temperature below a temperature of introduction of the clean synthesis gas into said at least one gas engine (26) to produce electricity, so as to desaturate said clean synthesis gas of its humidity.

4. Process according to Claim 3, **characterized in that** after compressing the synthesis gas, the gas thus compressed is cooled to a service temperature permitting its injection into said at least one engine and the acids contained in the synthesis gas thus compressed are removed before injection into said at least one gas engine (26).

5. Process according to any one of the preceding claims, **characterized in that** said at least one gas engine (26) is continuously fed with said clean synthesis gas, the pressure of the synthesis gas at the inlet of said at least one gas engine (26) being constant or substantially constant.

6. Process according to Claim 5, **characterized in that** in step a), said solid recovered fuel SRF is supplied in an amount necessary to produce more synthesis gas than necessary for feeding said at least one engine in step f) and **in that** the fluctuations in volume of clean synthesis gas generated are regulated by producing, from the synthesis gas not injected into said at least one engine, steam to feed at least one steam turbine (14).

7. Process according to Claim 6, **characterized in that** at least one combustion chamber is fed with the surplus of said clean synthesis gas not injected into said at least one gas engine (26), the fumes derived from the combustion of said clean synthesis gas being sent to a water-fed heat-recovery unit which performs the heating of said water by recovering the heat from said fumes to produce steam.

8. Process according to any one of the preceding claims, **characterized in that** in step d), the soot is recovered to be burnt in at least one combustion chamber, the fumes derived from the combustion of said soot being sent to a water-fed heat-recovery unit which performs the heating of said water by recovering the heat from said fumes to produce steam and to feed with said steam at least one steam turbine (14).

9. Process according to Claim 8, **characterized in that** said soot is extracted by means of extraction means (18-20), and said soot is then transported in a leaktight and non-oxidizing medium to said at least one combustion chamber.

10. Facility for performing the electricity production process according to any one of Claims 1 to 9, said facility comprising:
- a gasification reactor for producing a crude synthesis gas,
- a unit for purifying the crude synthesis gas, said unit comprising a mixing zone, in which said crude synthesis gas injected through at least one inlet port encounters and is mixed with at least one plasma jet and/or at least one oxidant stream, each plasma jet being generated by a plasma torch, said unit also comprising a reaction zone placed downstream of said mixing zone, in which takes place a reaction between said synthesis gas and said at least one plasma jet and/or said at least one oxidant stream in order to lower by thermal cracking the concentration of tars contained in the crude synthesis gas and to achieve a dew point of said tars of less than or equal to 20°C, the temperature of the synthesis gas at the outlet of said reaction zone being greater than or equal to 1100°C,
- a water-fed heat-recovery boiler configured to heat said water by recovering the heat from said purified synthesis gas to produce steam,
- a filtration unit including at least one bag filter (15) to clean the purified synthesis gas,
- a washing/cooling device and a device for compressing the synthesis gas placed downstream of said washing/cooling device, in the direction of movement of said synthesis gas towards at least one gas engine (26) ,
- at least one gas engine (26),
- a combustion boiler (17) to burn the surplus synthesis gas produced not sent to said at least one gas engine (26), said combustion boiler (17) comprising at least one combustion chamber and at least one combustion gas outlet port connected to a heat-recovery unit, said heat-recovery unit being fed with water and being configured to heat said water by recovering the heat from said combustion gases to produce steam; and
- at least one steam turbine (14) fed with steam via at least said heat-recovery boiler and said heat-recovery unit to produce electricity, these elements together making it possible to maximize the energy efficiency of said facility.

11. Facility according to Claim 10, **characterized in that** said at least one gas engine (26) and said boiler are placed in parallel so that the synthesis gas not sent to said at least one gas engine (26) is sent to said boiler.

12. Facility according to Claim 10 or 11, **characterized in that** said filtration unit includes in its lower part means (18-20) for extracting said soot, which soot is sent to at least one combustion chamber of said boiler via a transportation means placed in a leaktight medium.

13. Facility according to any one of Claims 10 to 12, **characterized in that** said combustion boiler (17) includes at least one cyclone chamber to receive said soot.
